# EUROPEAN PATENT SPECIFICATION

(11) **EP 0 524 028 B1**
(45) Date of publication and mention of the grant of the patent: **19.03.1997**
(21) Application number: 92306633.6
(22) Date of filing: 20.07.1992
(51) Int. Cl.: G02F 1/1335

(54) **Viewing angle compensator for liquid crystal display**
Sichtwinkelkompensator für Flüssigkristallanzeige
Compensateur de l'angle de vue pour afficheur à crystal liquide

(30) Priority: 19.07.1991 JP 203697/91
(43) Date of publication of application: 20.01.1993
(73) Proprietor: NIPPON OIL CO. LTD., Minato-ku Tokyo (JP)
(72) Inventor: Mazaki, Hitoshi, Kawasaki-shi, Kanagawa (JP); Toyooka, Takehiro, Yokohama-shi, Kanagawa (JP); Itoh, Hiroyuki, Yokohama-shi, Kanagawa (JP)
(74) Representative: Smaggasgale, Gillian Helen

(56) References cited:
- EP-A- 0 380 338
- PATENT ABSTRACTS OF JAPAN vol. 15, no. 11 (P-1150)10 January 1991 & JP-A-22 56 021
- PATENT ABSTRACTS OF JAPAN vol. 14, no. 565 (P-1143)17 December 1990 & JP-A-22 42 225

## Description

### Background of the Invention

The present invention relates to a viewing angle compensator for a display unit. More particularly, the present invention is concerned with a viewing angle compensator for a liquid crystal display having characteristics such as being able to diminish the viewing angle dependency of the liquid crystal display.

Liquid crystal displays occupy an important position, taking the place of the cathode-ray tube, because of such characteristic features as being driven at a low voltage, light weight and low cost. However, since the liquid crystal display adopts a method of displaying images by utilizing orientating behaviours of a liquid crystalline substance having an optical anisotropy, it inevitably involves the problem (hereinafter referred to as "viewing angle dependency") that the color tone of the screen changes according to the direction from which the panel is seen. The visual angle dependency becomes more conspicuous when a color compensating optical element such as a stretched film or a liquid crystal cell is mounted on the liquid crystal cell. For example, in the case of a lap-top type personal computer or a word processor display, utilizing a twisted nematic mode ("TN" hereinafter) or a super-twisted nematic mode ("STN" hereinafter), relatively good images are obtained when the screen is seen from the front, but when the screen is seen from a direction other than the front, the screen is colored or it becomes difficult to see images on the screen. Such viewing angle dependency of the display is not only undesirable to users but also is an obstacle to the realization of a larger screen which is required for a wall-mounted TV or the like. In the case of a large screen display, as long as the prior art is used, it is impossible to obtain clear images throughout the entire screen because the marginal portion comes to have a certain viewing angle even when the screen is seen from the front.

As means for diminishing such visual angle dependency of the display, it has been suggested that a film having a refractive index in the thickness direction larger than an intra-plane refractive index may be used [M. Akatuka et al.: Japan Display '89, 336 (1989)]. Actually, however, such a film is scarcely existent, and even when it is existent, the difference between the refractive index in the thickness direction and an intra-plane refractive index is 0.001 or so at most (Japanese Patent Laid Open No. 85519/1991), and thus an outstanding effect of remedying the viewing angle dependency has not been obtained yet. As a substance having a refractive index anisotropy, a liquid crystalline substance is promising, but it has been considered that in the case of a low molecular liquid crystal, it is difficult to maintain a stable orientation, while in the case of a high molecular liquid crystal, it is impossible to obtain a uniform orientation.

The present inventors have already proposed an optical element constituted by a nematic liquid crystalline polymer film having a twisted structure as a color compensator for TN for liquid crystal display (Japanese Patent Application No. 165718/1990) and STN liquid crystal display (Japanese Patent Laid Open No. 87720/1991 and EP 0380338). But for further development of a viewing angle compensator for liquid crystal display having a higher function, the present inventors have taken note of a liquid crystalline polymer film having a large refractive index in the thickness direction and made extensive studies. As a result, we accomplished the present invention.

It is an object of the present invention to provide a viewing angle compensator for a liquid crystal display unit and more particularly a viewing angle compensator for a liquid crystal display unit using a liquid crystalline polymer film having a structure wherein a refractive index in the thickness direction is larger than a refractive index at least in one direction in a plane and this oriented state is solidified.

### Summary of the Invention

In a first aspect of the present invention there is provided a viewing angle compensator for a liquid crystal display comprising a light transmitting substrate base and a film of a liquid crystalline polymer formed on the substrate, the liquid crystalline polymer taking in the liquid crystal state a structure wherein the refractive index in the thickness direction is larger than the refractive index in at least one direction in a plane perpendicular to said thickness direction and assuming a glassy state at a temperature lower than the liquid crystal transition point thereof wherein the said liquid crystalline polymer is oriented in a homeotropic fashion in the liquid crystal state. In a second aspect of the present invention there is provided a viewing angle compensator for a liquid crystal display wherein the liquid crystalline polymer is a polyester containing an ortho-substituted aromatic unit. A third aspect of the present invention is the use of a film produced by heat treating a liquid crystalline polymer on a substrate, as recited in claim 3.

### Brief Description of the Drawings

Fig. 1 is a sectional view showing the construction of a two-layer cell color-compensated type STN display and viewing angle compensator used in Example 3.

Fig. 2 shows the results obtained in Example 3, representing a viewing angle-contrast relation when the STN test display is seen from above-below and right-left; and.

Fig. 3 shows the results obtained in Example 5, representing a viewing angle-contrast relation when a TN test display is seen from above, below, right and left.

Fig. 4 is a sectional view showing the construction of a two layer cell color-compensated type STN display and view angle compensator.

Fig. 5 shows the results obtained in Example 10, representing a viewing angle-contrast relation when the STN test display is seen from above, below, right and left.

Fig. 6 is a sectional view of the construction of a TN display and viewing angle compensator used in Example 11.

### Description of the Preferred Embodiments

The present invention will be described in more detail hereinunder.

The compensator of the present invention is produced by heat-treating, on a self-supporting substrate or a vertical alignment layer, a liquid crystalline polymer which takes a uniform, monodomain structure with a refractive index in the thickness direction being larger than a refractive index at least in one direction in a plane and which permits this oriented state to be solidified easily, and solidifying the orientation in the state of liquid crystal. As a typical example of an orientation behavior having a three-dimensional refractive index distribution required for the compensator of the present invention there is mentioned a homeotropic orientation. The hometropic orientation as referred to herein includes an inclined (or pretilted) structure at a certain angle (e.g. 45° or less) from the normal direction of the substrate, in addition to a structure wherein molecular major axes are oriented perpendicularly to the substrate. A liquid crystalline polymer capable of maintaining its orientation in the state of liquid crystal also at room temperature or thereabouts stably is required to have the following property as an essential condition. In terms of a phase series of liquid crystal, it is important that there be no crystal phase in a lower temperature region than the liquid crystal phase region. If such crystal phase is present, an inevitable passage through it at the time of cooling for solidification results in destruction of the orientation once obtained, thus leading to unsatisfactory transparency and viewing angle compensating effect. In fabricating the compensator of the present invention, therefore, it is absolutely necessary to use a liquid crystalline polymer having glass phase in a lower temperature region than the crystal phase region. Although the liquid crystal phase of the liquid crystalline polymer is not specially limited, there usually is mentioned nematic phase or smectic phase.

As the liquid crystalline polymer used in the invention there may be employed any of liquid crystalline polymers taking in the state of liquid crystal a structure wherein a refractive index in the thickness direction is larger than a refractive index at least in one direction in a plane and assuming a glassy state at a temperature lower than the liquid crystal transition points thereof. Examples are main chain type liquid crystalline polymers such as polyesters, polyamides, polycarbonates, and polyester imides, as well as side chain type liquid crystalline polymers such as polyacrylates, polymethacrylates, polymalonates, and polysiloxanes. Particularly, polyesters are preferred in point of easy preparation, good orientation and high glass transition point. Polyesters containing an ortho-substituted aromatic unit, are most preferred. Polymers containing as a repeating unit an aromatic unit having a bulky substituent group in place of an ortho-substituted aromatic unit or an aromatic unit having fluorine or a fluorine-containing substituent group, are also employable. The "ortho-substituted aromatic unit" as referred to herein means a structural unit with main chain-constituting bonds ortho to each other. Examples are the following catechol, salicylic acid and phthalic acid units as well as substituted derivatives thereof: 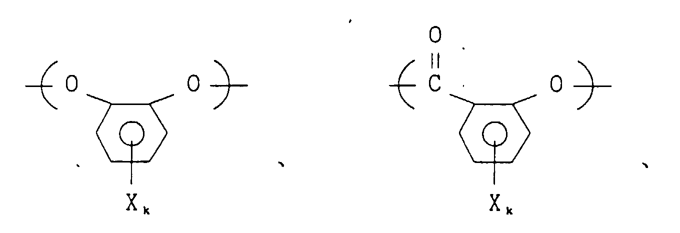 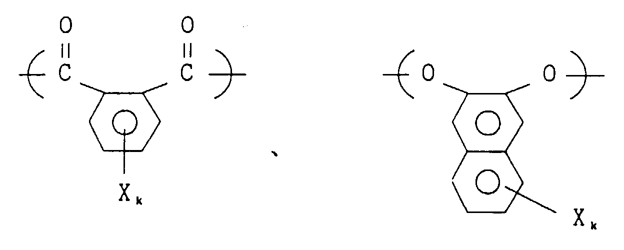 wherein X represents hydrogen, halogen, e.g. Cl or Br, an alkyl or alkoxy group having 1 to 4 carbon atoms, or phenyl, and k is 0 to 2.
The following are particularly preferred:

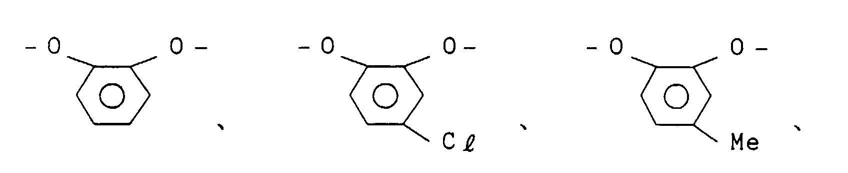

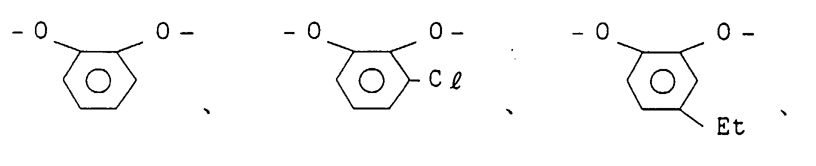

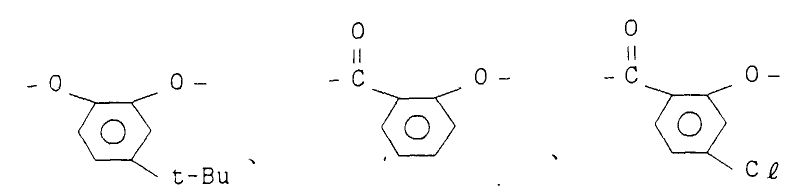

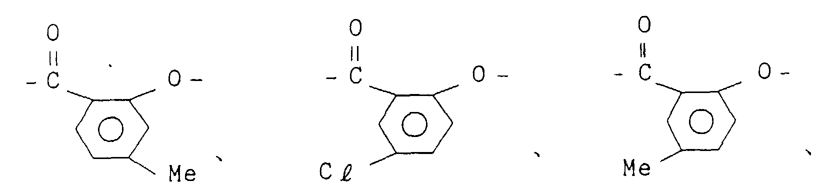

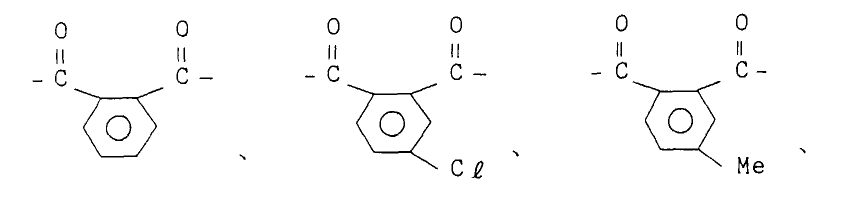

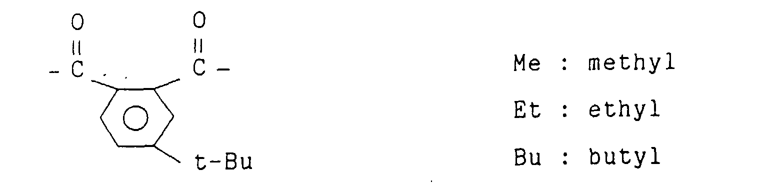

Also, as examples of the polyester used preferably in the present invention there are mentioned those containing as repeating units (a) a structural unit derived from a diol (hereinafter referred to as "diol component") and a structural unit derived from a dicarboxylic acid ("dicarboxylic acid component" hereinafter) and/or (b) a structural unit derived from a hydroxycarboxylic acid ("hydroxycarboxylic acid component" hereinafter) containing both carboxyl and hydroxyl groups in one unit. Preferably, these polyesters further contain the foregoing ortho-substituted aromatic unit.

As examples of the diol component there are mentioned the following aromatic and aliphatic diols: 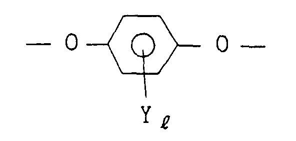 wherein Y represents hydrogen, halogen, e.g. Cl or Br, an alkyl or alkoxy group having 1 to 4 carbon atoms, or phenyl, and ℓ is 0 to 2, 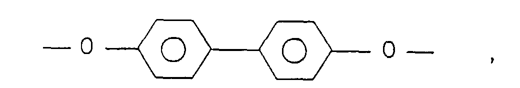 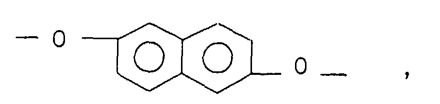 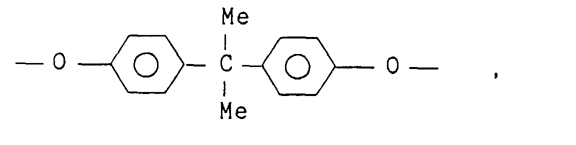 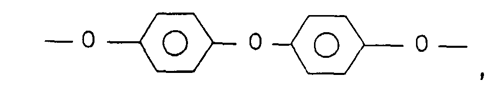 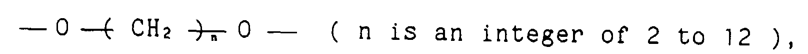 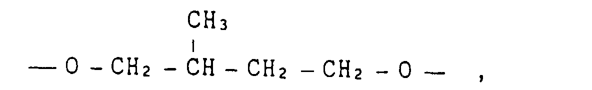 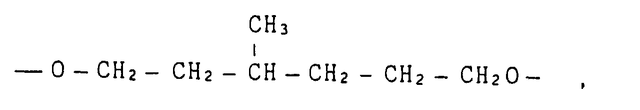 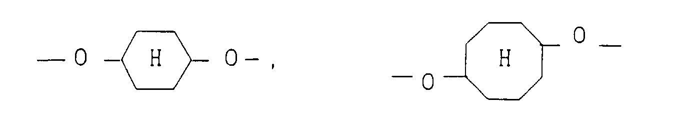 Particularly, the following are preferred:

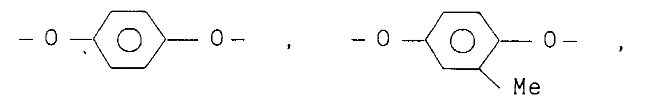

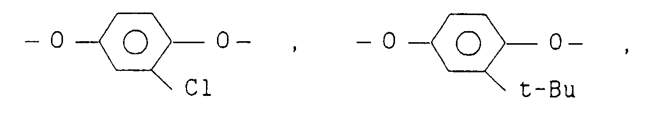

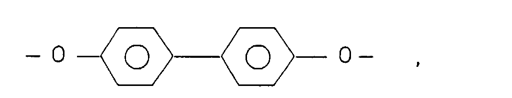

-O-CH₂-CH₂-O-,

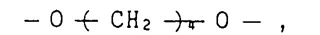

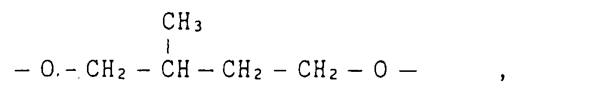

-O(CH₂)₆O-.

As examples of the dicarboxylic acid component, the following may be mentioned: 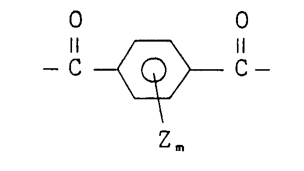 wherein Z represents hydrogen, halogen, e.g. Cl or Br, an alkyl or alkoxy group having 1 to 4 carbon atoms, or phenyl, and m is 0 to 2, 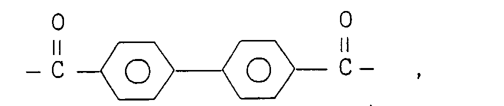 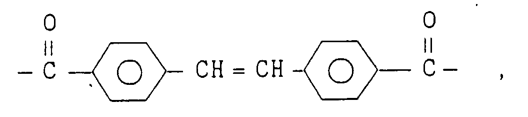 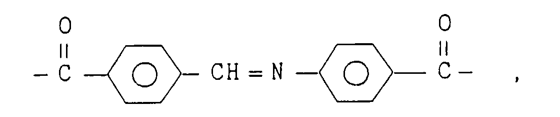 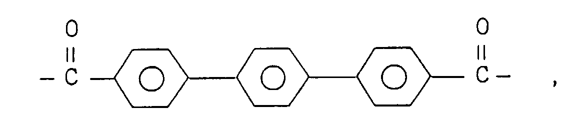 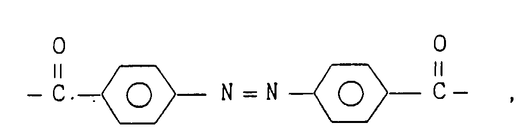 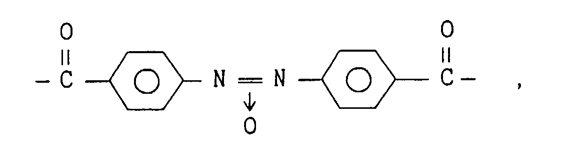 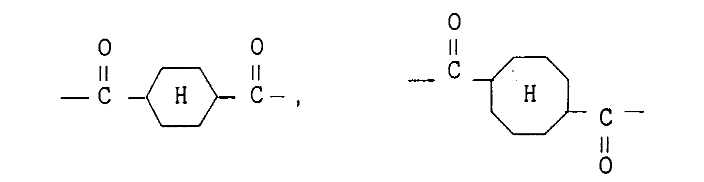 Particularly, the following are preferred: 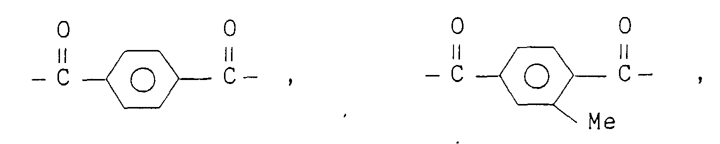 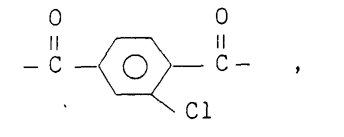 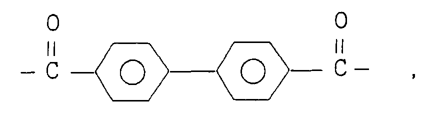 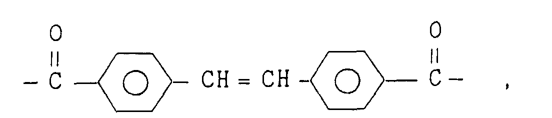 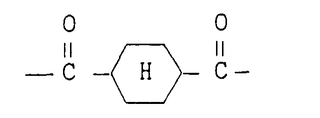 As examples of the hydroxycarboxylic acid component, the following units may be mentioned:

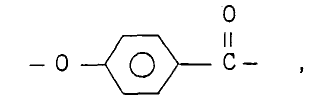

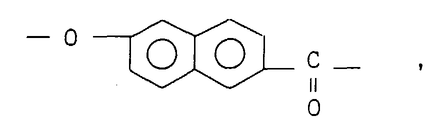

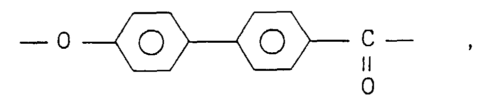

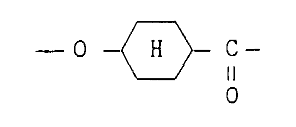

The dicarboxylic acid to diol mole ratio is approximately 1 : 1 like that of polyesters commonly used (carboxyl to hydroxyl ratio in the case of using a hydroxycarboxylic acid). The proportion of ortho-substituted aromatic units in the polyester is preferably in the range of 5 to 40 mole%, more preferably 10 to 30 mole%. In the case where the said proportion is smaller than 5 mole%, a crystal phase tends to appear under the liquid crystal phase, so such proportion is not desirable. A proportion larger than 40 mole% is not desirable, either, because the polymer will no longer exhibit liquid crystallinity. The following are typical examples of polyesters which may be used in the present invention:

Polymer consisting essentially of the following structural units:

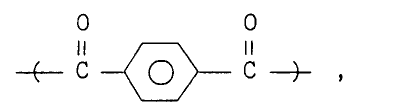

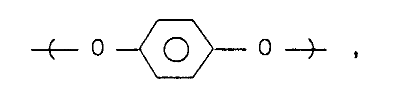

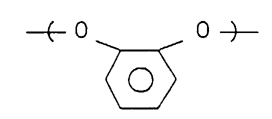

Polymer consisting essentially of the following structural units:

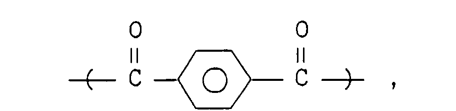

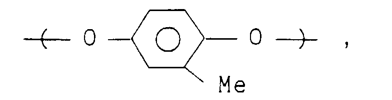

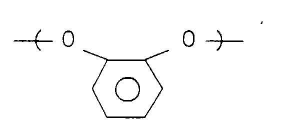

Polymer consisting essentially of the following structural units:

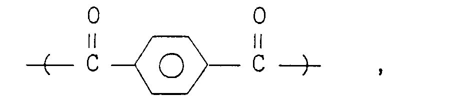

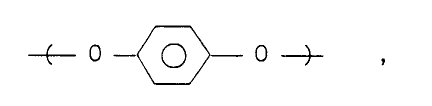

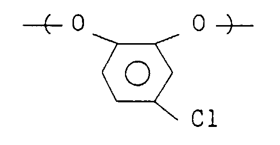

Polymer consisting essentially of the following structural units:

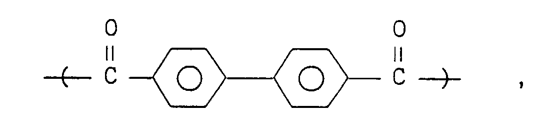

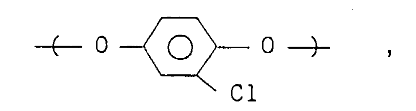

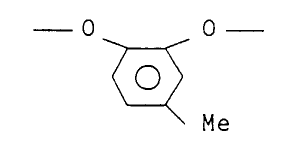

Polymer consisting essentially of the following structural units:

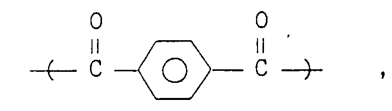

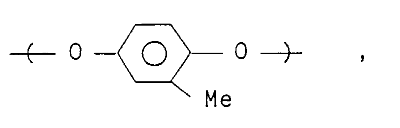

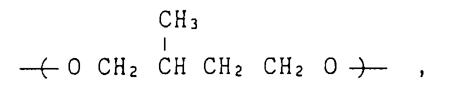

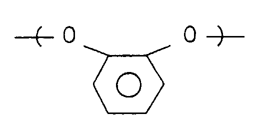

Polymer consisting essentially of the following structural units:

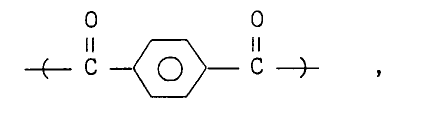

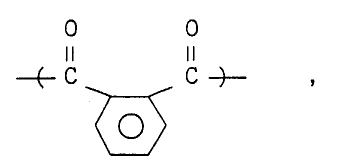

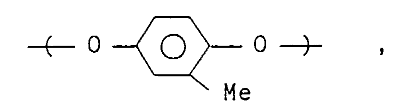

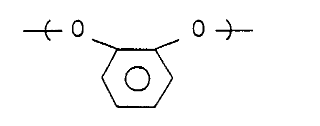

Polymer consisting essentially of the following structural units:

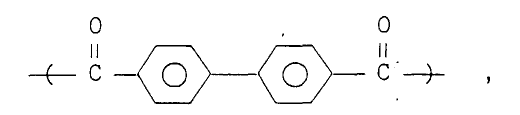

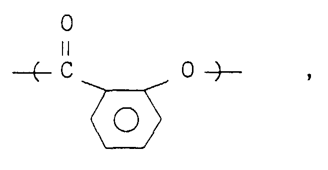

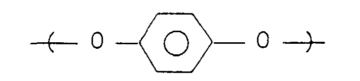

Polymer consisting essentially of the following structural units:

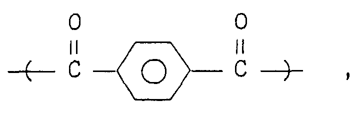

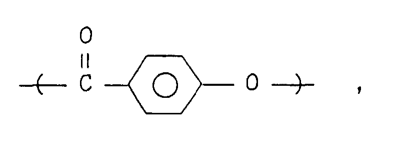

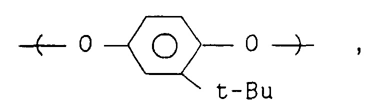

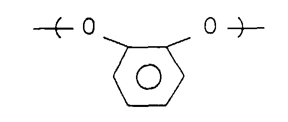

Also preferred are polymers which, in place of ortho-substituted aromatic units, contain as repeating units such bulky substituent-containing aromatic units or aromatic units containing fluorine or fluorine-containing substituents as shown below:

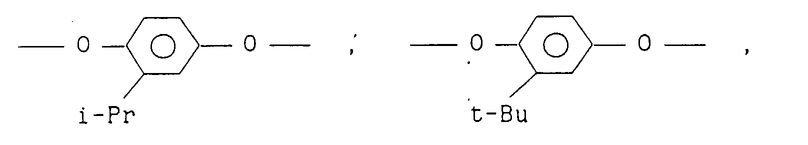

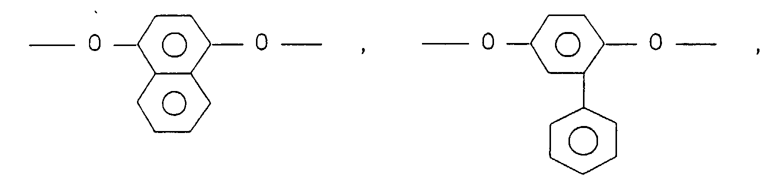

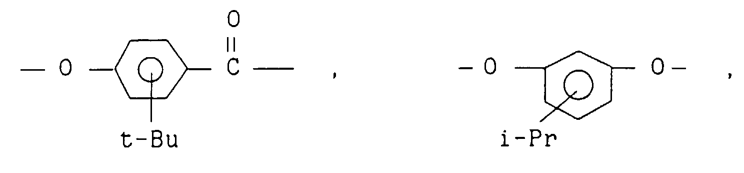

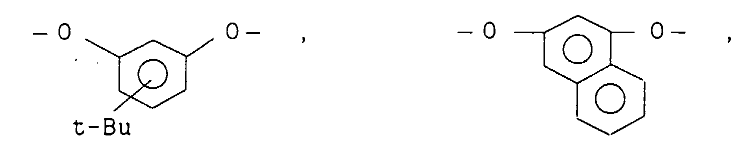

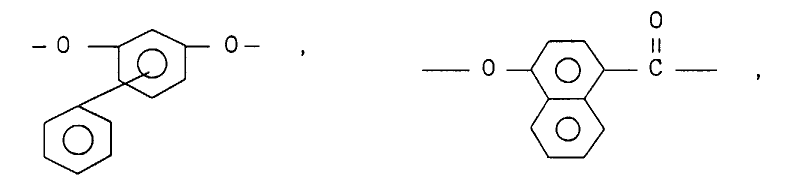

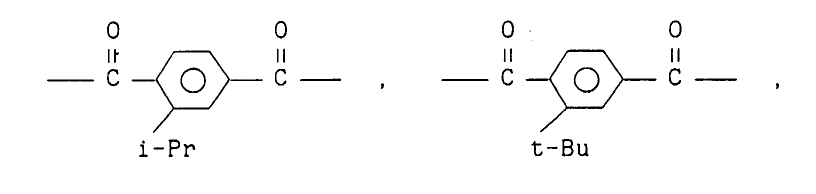

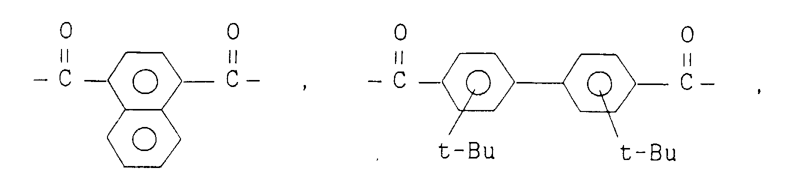

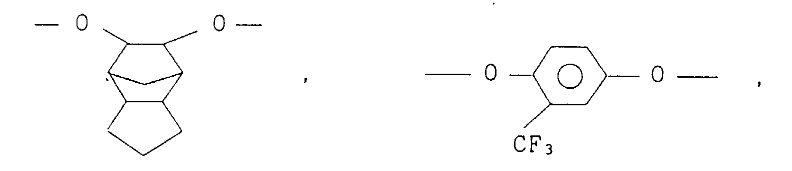

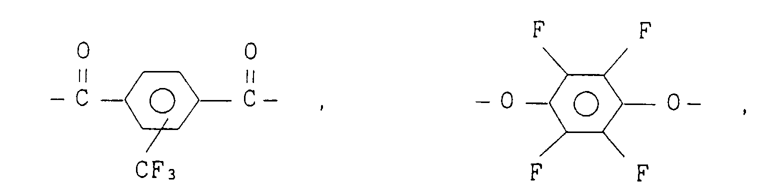

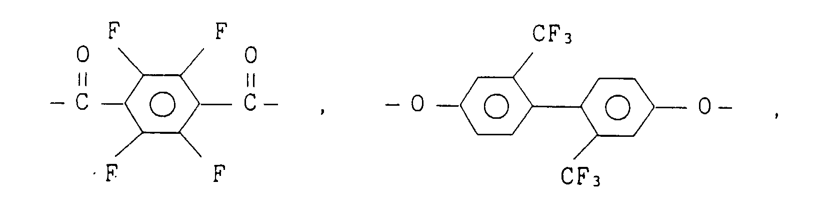

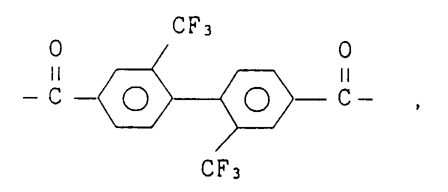

The polymers exemplified above range in molecular weight preferably from 0.05 to 3.0, more preferably 0.07 to 2.0, in terms of inherent viscosity as determined at 30°C in a solvent, e.g. a mixed phenol/tetrachloroethane [60/40 (weight ratio)] solvent. An inherent viscosity lower than 0.05 is not desirable because the strength of the resulting film of polymer liquid crystal will be low, while if the inherent viscosity is higher than 3.0, there will arise such problems as the deterioration of orientatability and an increase of the time required for orientation because of too high viscosity during the formation of liquid crystal.

The glass transition temperature is usually higher than -10°C, preferably higher than 0°C,more preferably higher than 10°C. In the case of a glass transition point lower than -10°C, there may cause a change of the liquid crystal structure once immobilized, thus resulting in the deterioration of a function based on the liquid crystal structure.

How to prepare the polymer used in the present invention is not specially limited. There may be adopted any of the polymerization processes known in this field, e.g. a melt polymerization process or an acid chloride process using an acid chloride of a corresponding dicarboxylic acid.

According to a melt polycondensation process, the polyester can be prepared by polymerizing a corresponding dicarboxylic acid and an acetylated compound of a corresponding diol at a high temperature and in a high vacuum. The molecular weight thereof can be adjusted easily by controlling the polymerization time or the feed composition. For accelerating the polymerization reaction there may be used a known metal salt such as sodium acetate. In the case of using a solution polymerization process, the polyester can be prepared easily by dissolving predetermined amounts of a dicarboxylic acid dichloride and a diol in a solvent and heating the resulting solution in the presence of an acid acceptor such as pyridine.

Compositions obtained by mixing an optically active compound with such a liquid crystalline polyester containing ortho-substituted aromatic units or liquid crystalline polymers obtained by incorporating optically active structures into polyesters containing ortho-substituted aromatic units can also provide structures wherein an explanation will now be made about an optically active compound which is incorporated. Typical examples are optically active low-molecular compounds. Any compound having optical activity can be used in the present invention, but from the standpoint of compatibility with the base polymer it is desirable to use optically active, liquid crystalline compounds. The following are concrete examples: 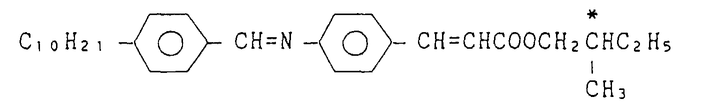 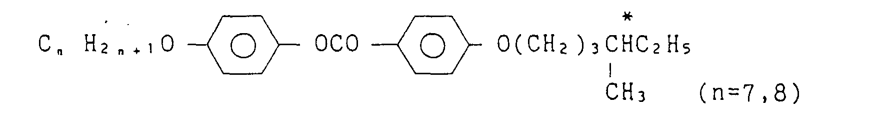 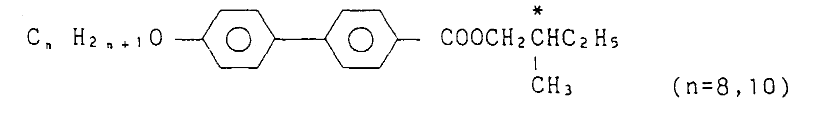 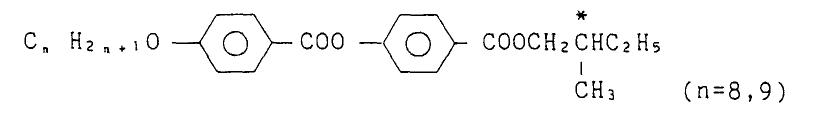 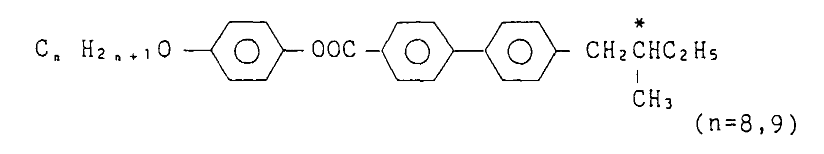 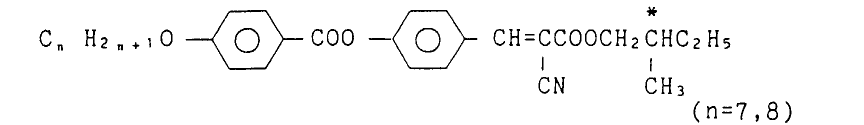 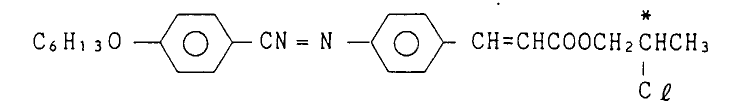 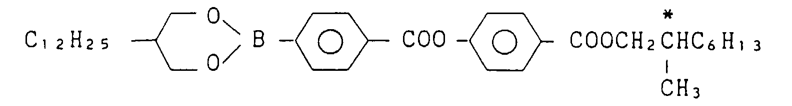 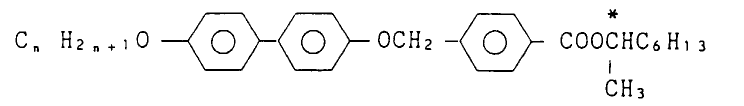 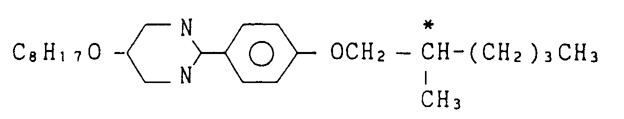 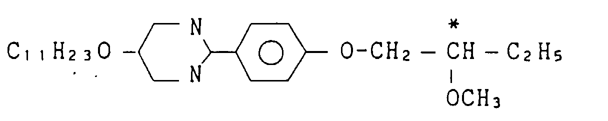 cholesterol derivatives.

As examples of the optically active compound used in the present invention there also may be mentioned optically active high-molecular compounds. Any high polymer may be used if only it contains an optically active group in the molecule, but when the compatibility with the base polymer is taken into account, it is desirable to use a high polymer which exhibits liquid crystallinity. Examples are the following liquid crystalline polymers having optical activity: polyacrylates, polymethacrylates, polymalonates, polysiloxanes, polyesters, polyamides, polyester amides, polycarbonates, polypeptides, and cellulose. Above all, from the standpoint of compatibility with the liquid crystalline polymer serving as the base, mainly aromatic, optically active polyesters are most preferred. Examples are the following polymers:

Polymer comprising the following structural units: 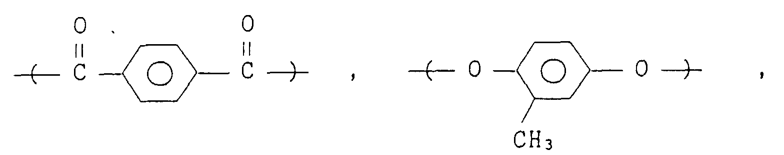 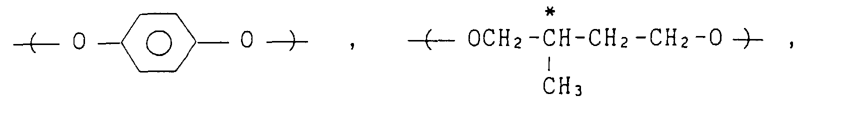 Polymer comprising the following structural units: 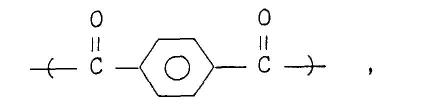 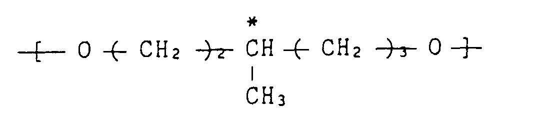 Polymer comprising the following structural units: 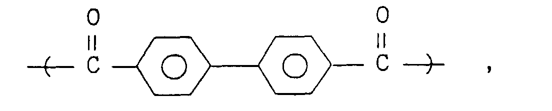 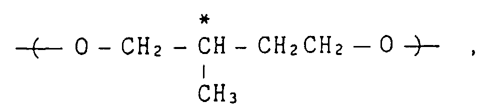 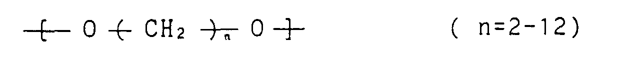 Polymer comprising the following structural units: 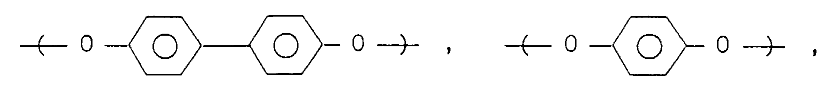 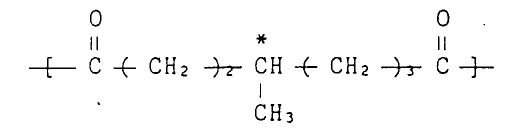 Polymer comprising the following structural units: 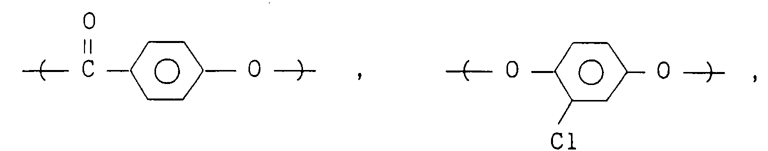 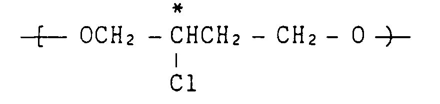 Polymer comprising the following structural units:

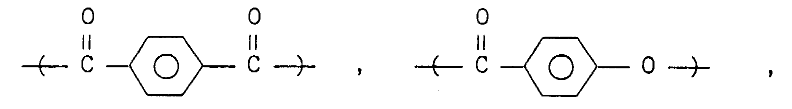

(̵OCH₂-CH₂-O)̵,

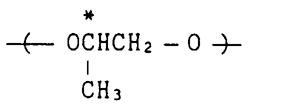

Polymer comprising the following structural units: 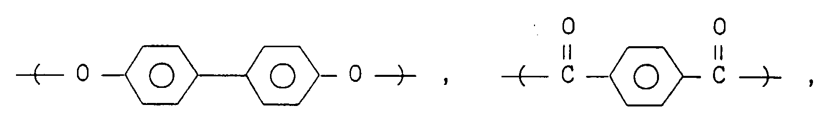 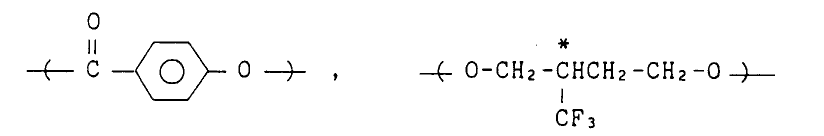 Polymer comprising the following structural units: 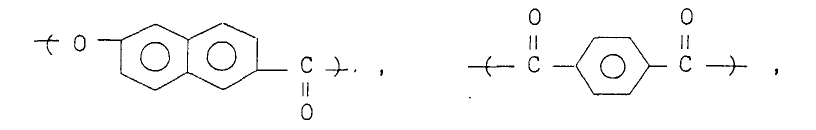 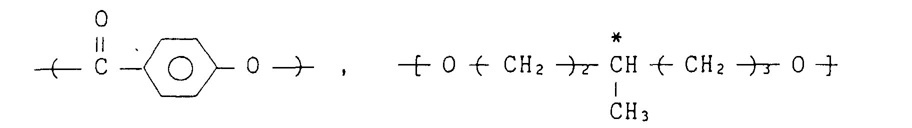 Polymer comprising the following structural units: 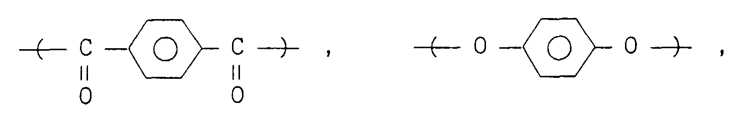 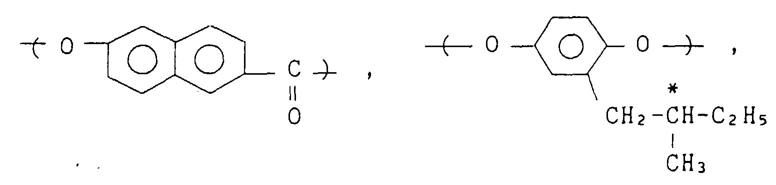 Polymer comprising the following structural units: 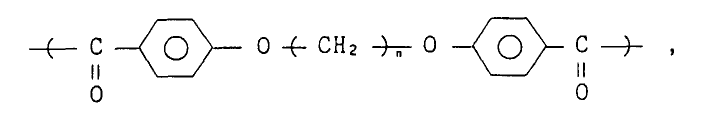 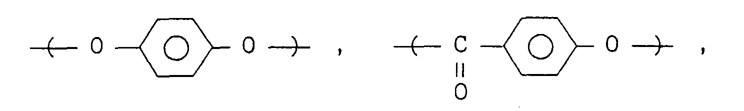 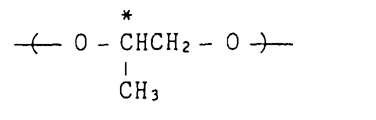 Polymer comprising the following structural units:

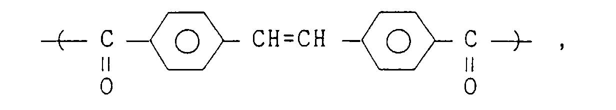

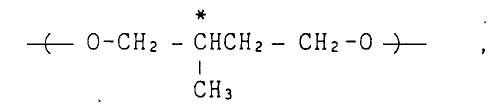

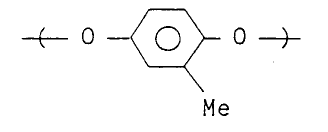

In each of these polymers, the proportion of the unit having an optically active group is usually in the range of 0.5 to 80 mole%, preferably 5 to 60 mole%.

These polymers preferably range in molecular weight from 0.05 to 5.0 in terms of inherent viscosity as determined at 30°C in phenol/tetrachloroethane for example. An inherent viscosity larger than 5.0 is not desirable because of too high viscosity which eventually causes deterioration of orientatability. An inherent viscosity smaller than 0.05 is not desirable, either, because it becomes difficult to control the composition.

Such a composition can be prepared by mixing a liquid crystalline polyester and an optically active compound at a predetermined ratio by a solid mixing, solution mixing or melt-mixing method. The proportion of the optically active component in the composition is in the range of preferably 0 to 50 wt%, more preferably 0 to 30 wt%, although it differs depending on the proportion of optically active groups contained in the optically active compound. If the proportion of the optically active compound is more than 50 wt%, the compatibility of the optically active compound and the polyester containing ortho-substituted aromatic units is bad in the liquid crystal state thereby exerting a bad influence on the orientation.

The compensator of the present invention can also be prepared by using a polymer which has an optically active group in the main chain and is thus optically active, which has a structure wherein a refractive index in the thickness direction is greater than that in at least one direction in the face and which permits the state of the orientation to be immobilized easily. Examples are main chain type liquid crystalline polymers such as polyesters, polyamides, polycarbonates and polyester imides, as well as side chain type liquid crystalline polymers such as polyacrylates, polymethacrylates and polysiloxanes. Polyesters are particularly preferred in point of easiness of preparation, superior orientatability and high glass transition point. Most preferred polyesters are those which contain ortho-substituted aromatic units as constituents. But also employable are polymers which, in place of such ortho-substituted aromatic units, contain as constituents bulky substituent-containing aromatic units or aromatic units having fluorine or fluorine-containing substituent groups. These optically active polyesters can be obtained by introducing in the liquid crystalline polyesters so far explained such optically active groups as shown below using diols, dicarboxylic acids and hydroxycarboxylic acids (the ∗ mark in the following formulae represents an optically active carbon):

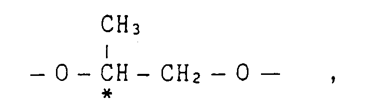

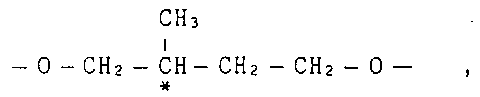

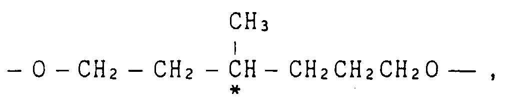

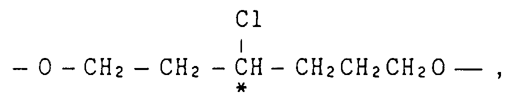

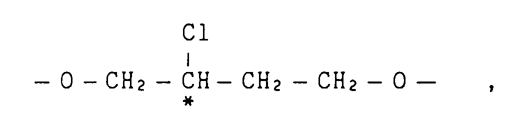

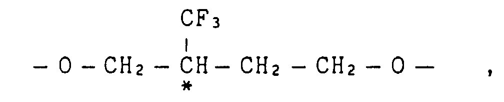

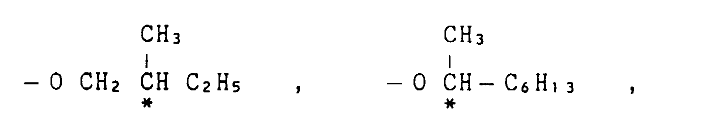

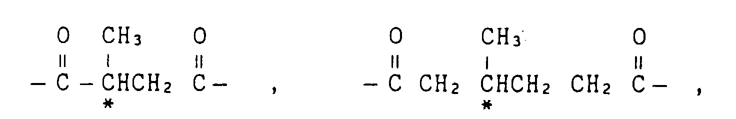

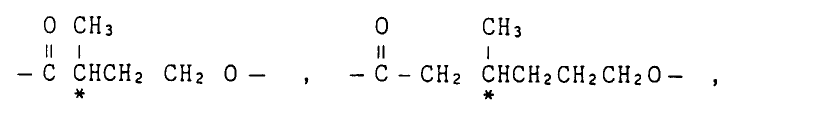

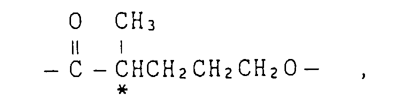

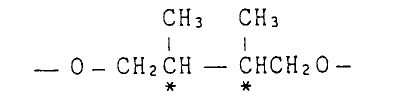

The proportion of these optically active groups in the polymers is preferably in the range of 0 to 45 mole%, more preferably 0 to 35 mole%. If the said proportion is more than 45 mole%, the orientability in the liquid crystalline stage will become bad. The molecular weights of these polymers are in the range of preferably 0.05 to 3.0, more preferably 0.07 to 2.0, in terms of intrinsic viscosity as determined at 30°C in, for example, a mixed phenol/tetrachloroethane (60/40) solvent. A smaller intrinsic viscosity than 0.05 is not desirable because the strength of the resulting high molecular liquid crystal will be low, while if the intrinsic viscosity is larger than 3.0, there will arise problems such as the deterioration of orientability and an increase of the time required for orientation because of too high viscosity during the formation of liquid crystal. The glass transition temperature is usually higher than -10°C, preferably higher than 0°C, more preferably higher than 10°C. If the glass transition point is lower than -10°C, there may cause a change of the liquid crystal structure which has once been immobilized, thus resulting in the deterioration of a function based on the liquid crystal structure.

These polymers can be prepared by the foregoing melt polycondensation process or acid chloride process.

The following are typical examples of the liquid crystalline polymer used in the present invention described above.

Polymers represented by: 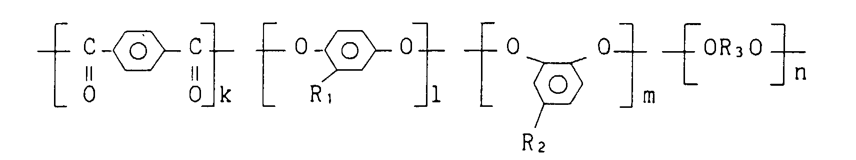 wherein R₁ and R₂ are each H₁ halogen (such as Cℓ) , a linear or branched alkyl of C1 - 6; R₃ is 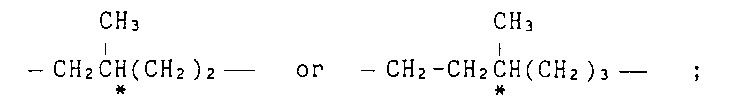 k = l+m+n, k/n = 100/0 ∼ 60/40, preferably 100/0 ∼ 80/20, and l/m = 5/95 ∼ 95/5, preferably 20/80 ∼ 80/20.

Polymer mixture represented by: 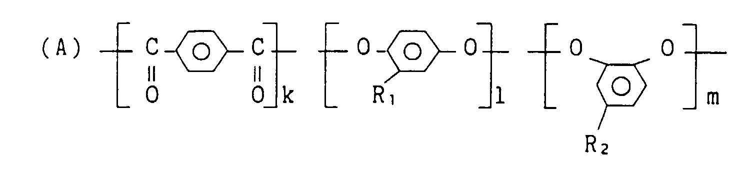 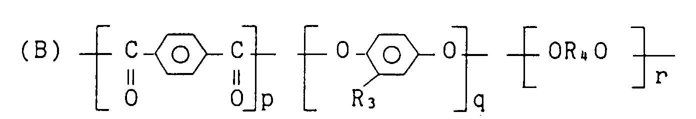 wherein (A)/(B) = usually 100/0 - 60/40, preferably 160/0 - 80/20, k = l+m, l/m = 5/95 - 95/5, p = q+r, q/r = 10/90 - 90/10, R₁, R₂ and R₃ are each H₁ hologen (such as Cℓ), a linear or branched alkyl of C1 - 6, and R₄ is 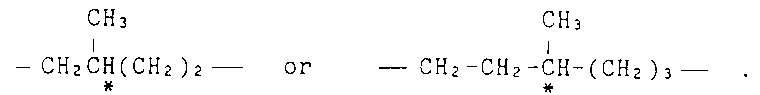 Polymer represented by: 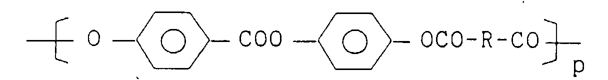 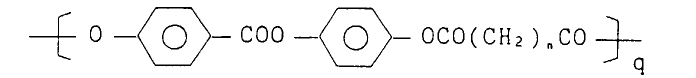 wherein p/q = 0.5/99.5 - 40/60, preferably 1/99 - 20/80, n is an integer of 2 - 8, R is 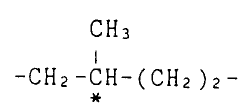 having an optional optical purity.
Polymer represented by: 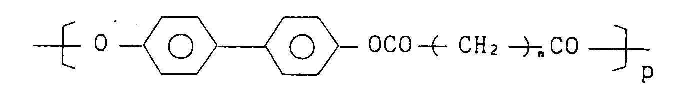 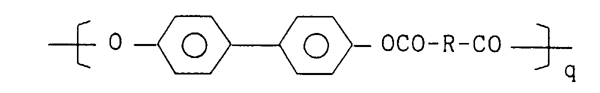 wherein p/q = 99.9/0.1 - 70/30, preferably 99.5/0.5 - 80/20, more preferably 99/1 - 90/10, n is an integer of 2 - 8, and R is 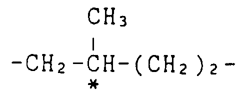 having an optional optical purity.
Polymer mixture represented by: 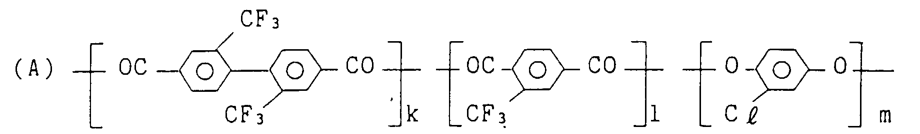 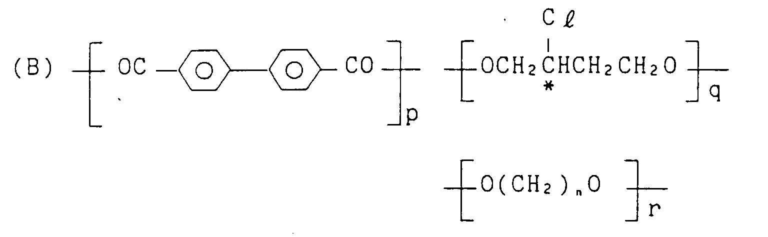 wherein (A)/(B) = usually 100/0 - 70/30, preferably 99.9/0.1 - 80/20, more preferably 99/1 - 85/15, k = l+m, l/m = /9 ∼ 90/10, p = q+r, q/r = 10/90 ∼ 80/20, n is an integer of 2 - 8.
Polymer represented by: 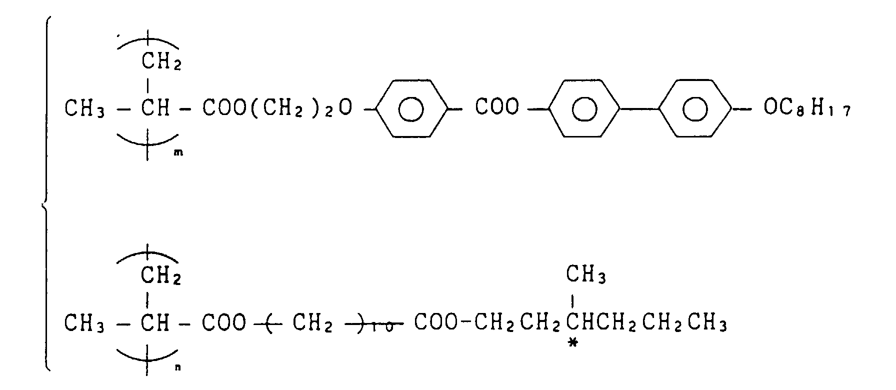 wherein m/n = usually 99.9/0.1 - 60/40, preferably 99.5/0.5 - 80/20.
Polymers represented by: 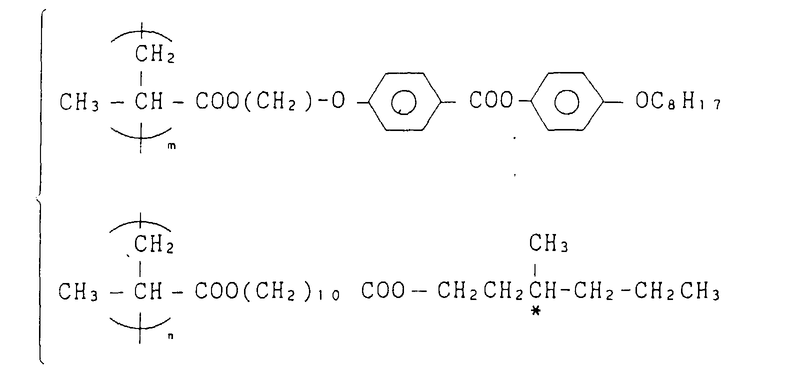 wherein m/n = usually 99.9/0.1 - 60/40, preferably 99.5/0.5 - 80/20.

The mark ∗ represents an optically active carbon.

These polymers range in molecular weight preferably from 0.05 to 3.0, more preferably 0.07 to 2.0, in terms of inherent viscosity as determined at 30°C in a solvent, e.q. tetrahydrofuran, acetone, cyclohexanone, or mixed phenol/tetrachloroethane (60/40) solvent. If the inherent viscosity is smaller than 0.05, the strength of the resulting liquid crystalline polymer will be low, and a larger value than 3.0 will result in too high viscosity during the formation of liquid crystal, thus causing deteriorated orientatability and increase in the time required for orientation.

A typical construction example of the compensator of the present invention is a two-layer structure comprising a light transmitting substrate and a liquid crystalline polymer film formed thereon. As examples of the light transmitting base used there are mentioned light transmitting plastic film, plastic sheet and polarizing film. As glass there is used, for example, soda glass, silica-coated soda glass, or borosilicate glass. As to a plastic substrate , it is preferable for it to be optically isotropic. For example, there may be used, polymethyl methacrylate, polystyrene, polycarbonate, polyether sulfone, polyphenylene sulfide, amorphous polyolefin, triacetyl cellulose, or epoxy resin. Above all, polymethyl methacrylate, polycarbonate, polyether sulfone, amorphous polyolefin and triacetyl cellulose are preferred.

Even by using a light transmitting base with a vertically orienting agent such as a silanizing agent, lecithin or a chromium complex formed thereon, it is possible to obtain a liquid crystal structure wherein a refractive index in the thickness direction is larger than a refractive index in at least one direction in a plane. By forming a liquid crystalline polymer film on the light transmitting base which has not been subjected to an orientation treatment or has been subjected to a vertical orientation treatment, there is produced the compensator of the invention having a viewing angle compensating effect.

The liquid crystalline polymer is applied onto the base in the state of a solution or in a melted state. A solution of the liquid crystalline polymer is obtained by dissolving a predetermined concentration of the polymer in a predetermined solvent. In the case of using a composition comprising two or more kinds of polymers, for example in the case of solution mixing, the components are dissolved in a solvent at predetermined proportions to prepare a solution of a predetermined concentration. The solvent to be used differs depending on the kind of polymers used, but usually there may be used any of ketones such as acetone, methyl ethyl ketone and cyclohexanone, ethers such as tetrahydrofuran and dioxane, halogenated hydrocarbons such as chloroform, dichloroethane, tetrachloroethane, trichloroethylene, tetrachloroethylene and o-dichlorobenzene, mixed solvents thereof with phenol, as well as dimethylformamide, dimethylacetamide and dimethyl sulfoxide. The concentration of the solution greatly differs depending on the viscosity of polymer used, but usually it is in the range of 5% to 50%, preferably 8% to 30%. The solution is then applied onto a light transmitting substrate such as a light transmitting glass sheet, plastic sheet or plastic film which has not been subjected to an orientating treatment or has been subjected to a vertically orientation treatment. As the polymer solution coating method there may be adopted spin coating method, roll coating method, printing method, curtain coating method, or dipping/pulling up method. After the coating, the solvent is removed by drying and then heat treatment is performed at a predetermined temperature for a predetermined time to complete a liquid crystal orientation of monodomain. As to the heat treatment temperature, the higher the temperature, the better, because it is possible to lower the polymer viscosity, however, a too high temperature is not desirable because it will cause an increase in cost and deterioration of the working efficiency or may cause thermal deformation of the film in the case where the film is a plastic film. A certain polymer has an isotropic phase in a higher temperature region than the liquid crystal phase, so even if the heat treatment is carried out in this temperature region, orientation will not be obtained. Thus, it is desirable that in accordance with the characteristics of polymer used there be performed heat treatment at a temperature above the glass transition point of the polymer and below the transition point thereof to an isotropic phase. Usually, the range of 50°C to 300°C is preferable and the range of 100°C to 250°C is more preferable. The heat treatment time required for attaining a satisfactory orientation differs depending on the composition and molecular weight of polymer used, but preferably it is in the range of 5 seconds to 120 minutes, more preferably 10 seconds to 60 minutes. If the said time is shorter than 5 seconds, the orientation obtained will be unsatisfactory, and if it is longer than 120 minutes, the transparency of the resulting compensator may be deteriorated. The same state of orientation can also be obtained by applying the polymer in a melted state onto the substrate which has not been subjected or has been subjected to the vertically orientation treatment, followed by heat treatment. By performing the treatments described above using the liquid crystalline polymer in the present invention there can be obtained in the state of liquid crystal a structure wherein a refractive index in the thickness direction is larger than a refractive index at least in one direction in a plane.

By subsequent cooling to a temperature below the glass transition point of the liquid crystalline polymer, the oriented state thus obtained can be solidified without impairing the orientation. Generally, in the case of using a polymer having a crystal phase in a lower temperature region than the liquid crystal phase region, the orientation in the state of liquid crystal will be destroyed by cooling. According to the method of the present invention, such phenomenon does not occur because there is used a polymer having glass phase in a region lower than the temperature region which exhibits crystal phase, and it is possible to completely solidify the structure in which the refractive index in the thickness direction is larger than that at least in one direction in a plane.

The cooling rate is not specially limited. Such orientation is solidified by mere transfer from within the heating atmosphere into an atmosphere held at a temperature below the glass transition point of the liquid crystalline polymer. For enhancing the production efficiency there may be performed a forced cooling such as air cooling or water cooling. The film thickness after the solidification is preferably in the range of 0.1 µm to 50 µm, more preferably 0.5 µm to 40 µm.

In order for the viewing angle compensator of the present invention to exhibit a satisfactory viewing angle compensating effect, it is necessary to effect matching of the refractive index in the three-dimensional direction of the layer (compensating layer) of the liquid crystalline polymer film according to a liquid crystal display cell. The control of the refractive index in the three-dimensional direction of the compensating layer can be attained by suitably selecting the kind of polymer or by mixing two or more kinds of polymers, provided in both cases it is essential that the refractive index in the thickness direction be larger than that in at least one direction in a plane. The difference between the refractive index in the thickness direction and the refractive index in at least one direction in a plane which is smaller than the former is usually not less than 0.01, preferably not less than 0.05. At this time, the control of the compensating layer thickness must also be done, but it is not so strict if only the film thickness can be reproduced within an error range of usually ± 10%, preferably ± 5%. With such a degree of error, there will be no visible difference with respect to the viewing angle compensating effect.

The viewing angle compensator thus obtained may be used as it is, or a protective layer of a transparent plastic material may be formed on the surface of the compensator for the protection of the surface. Or it may be used in an integrated form with another optical element such as a polarizing plate for example.

The liquid crystalline polymer film formed in the manner described above exhibits a viewing angle compensating effect for a liquid crystal display having a twist angle in the range of 70° to 300°. For example, it can remedy the visual angle dependency of TN display or STN display. The position where the viewing angle compensator is to be mounted is not specially limited if only it is between a liquid crystal display cell and an overlying polarizing plate. For example, in the case where a color compensator is used above the liquid crystal display cell, the viewing angle compensator may be disposed between the polarizing plate and the color compensator or between the color compensator and the liquid crystal display cell. The compensator may be used by one plate or two or more plates may be placed between overlaying and underlaying polarizing plates.

Thus, the viewing angle compensator produced by the present invention can diminish the viewing angle dependency peculiar to a liquid crystal display, thereby not only contributing to upgrading a liquid crystal display but also being contributable to the realization of a large area of a liquid crystal display. Thus, the viewing angle compensator according to the present invention is of great industrial value.

### (Examples)

The following examples are given to further illustrate the present invention, but it is to be understood that the invention is not limited thereto. The following analyzing methods were used in those examples.

### (1) Determination of Polymer Composition

Polymer was dissolved in deuterated chloroform or deuterated trifluoroacetic acid and the polymer composition was determined using ¹H-NMR or 400MHz (JNM-GX400, a product of Japan Electron Optics Laboratory Co., Ltd.).

### (2) Determination of Inherent Viscosity

Determined in a mixed phenol phenol/tetrachloroethane solvent (60/40 weight ratio) at 30°C using a Ubbelohde's viscometer.

### (3) Determination of Liquid Crystal Phase Series

Determined by measurement using DSC (DuPont 990 Thermal Analyzer) and observation using an optical microscope (BH2 Polarizing Microscope, a Product of Olympus Optical Co., Ltd.).

### (4) Determining Stereostructure of Liquid Crystalline Polymer Film after Solidifying of Orientation

A refractive index in the three-dimensional direction was measured using Abbe's refractometer (Type-4, a product of Atago K.K.), and a structure was determined by observation using a conoscope attached to an optical microscope.

### Example 1

Using 100 mmol of terephthalic acid, 50 mmol of methylhydroquinone diacetate and 100 mg of sodium acetate, polymerization was conducted in a nitrogen atmosphere at 300°C for 1 hour. The resulting polymer was dissolved in tetrachloroethane and thereafter reprecipitation was made using methanol to afford 25.0 g of purified polymer. The polymer had an inherent viscosity of 0.14, a nematic phase as a liquid crystal phase and a glass transition point of 130°C.

Using this polyester, there was prepared a 10 wt% solution thereof in tetrachloroethane. The solution was applied onto a pyrex plate having a size of 10 cm x 10 cm and a thickness of 1.1 mm by a screen printing method, then dried, heat-treated at 220°C for 30 minutes and then cooled to obtain a viewing angle compensator having a compensating layer thickness of 3.5 µm. The compensator was completely transparent, and upon conoscope observation it proved to have a positive crystal structure of homeotropic orientation.

### Example 2

The polymer solution described in Example 1 was cast onto a high refraction glass plate (a product of Hoya Glass Works, Ltd., refractive index: 1.84), followed by drying and heat treatment in the same way as in Example 1. As a result, there was obtained a transparent film 3.0 µm in thickness having a refractive index of 1.54 in all of directions parallel to the substrate and a refractive index of 1.72 in the thickness direction.

### Comparative Example 1

The polymer solution described in Example 1 was applied onto a glass plate having a rubbed polyimide film, then dried and heat-treated at 220 °C for 30 minutes to afford a transparent film 3.4 µm thick. But the polymer exhibited a homogeneous nematic orientation.

### Example 3

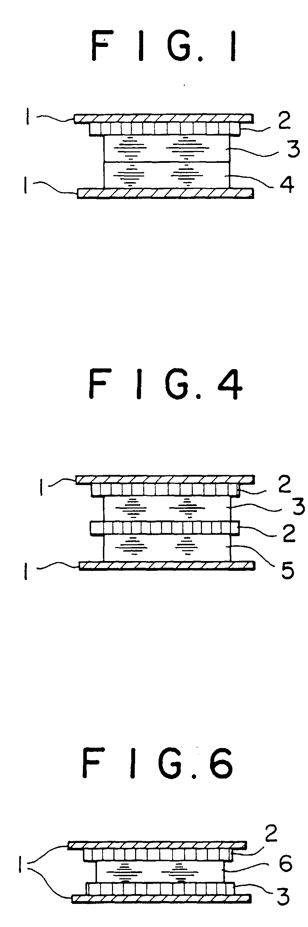

The viewing angle compensator obtained in Example 1 was disposed on a two-layer cell type color-compensated STN display in such a manner that the compensating layer was located on the upper side, as shown in Fig. 1.

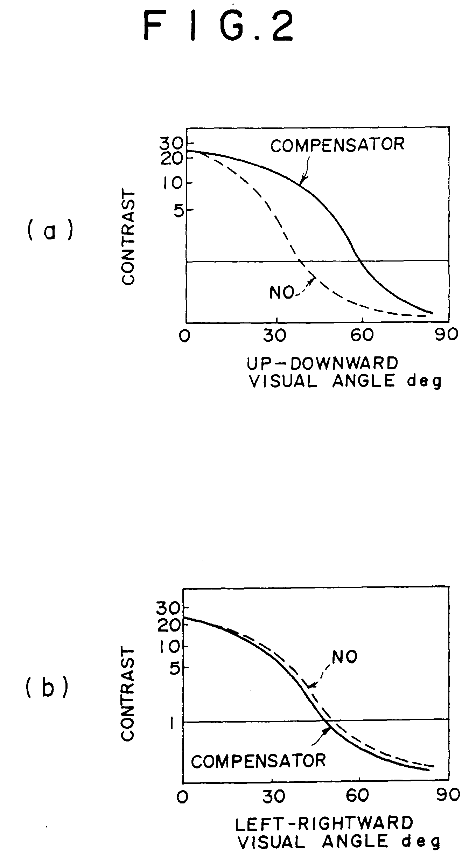

As a result of having checked a compensating effect of this test display, it turned out that the lowering in contrast with increase of the viewing angle became gentle as compared with that in the absence of the viewing angle compensator, as shown in Fig. 2.

### Example 4

There was prepared a 10.1% solution in tetrachloroethane containing the polymer prepared in Example 1 and an optically active polyester shown in formula (1) at a ratio of 99:1. This solution was applied onto a 1.1 mm thick glass plate having a size of 10 cm x 10 cm by a spin coating method, then dried, heat-treated at 220°C for 30 minutes and thereafter cooled to obtain a transparent film having a thickness of 4.0 µm. As a result of conoscope observation, the film proved to have a positive crystal structure of homeotropic orientation.

The above polymer solution was applied onto a high refraction glass plate by a casting method, then subjected to the same treatment as above and measured for refractive index to find that the refractive index was 1.55 in all of directions parallel to the base and the refractive index in the thickness direction was 1.75.

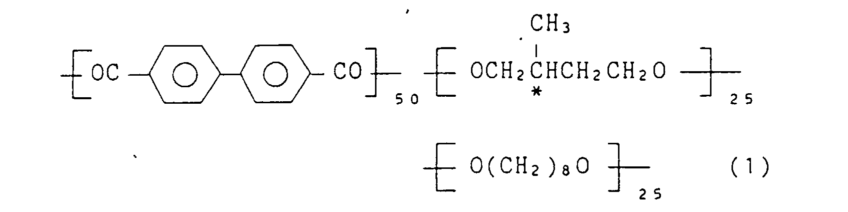

### Example 5

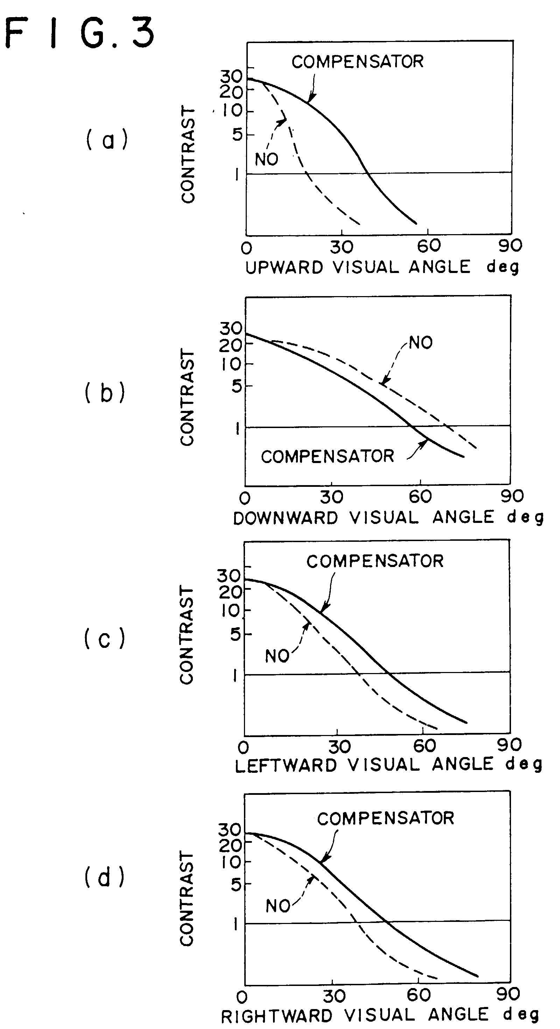

The viewing angle compensator obtained in Example 4 was disposed on an upper side of a TN display cell and a comparison was made with the case of not using the viewing angle compensator with respect to the viewing angle dependency. The results obtained are as illustrated in Fig. 3.

### Example 6

The polymer prepared in Example 1 and the polymer (inherent viscosity: 0.10) of formula (2) were mixed together at a weight ratio of 1:1 to prepare a 15 wt% solution thereof in tetrachloroethane. Then solution was then applied onto a 100 µ thick polyethylene terephthalate film by means of a roll coater, then dried, heat-treated at 180°C for 15 minutes and then cooled with cold air to solidify, thereby affording a compensator having a compensating layer thickness of 5 µm. Upon conoscope observation, the compensating layer proved to have a positive crystal structure of homeotropic orientation.

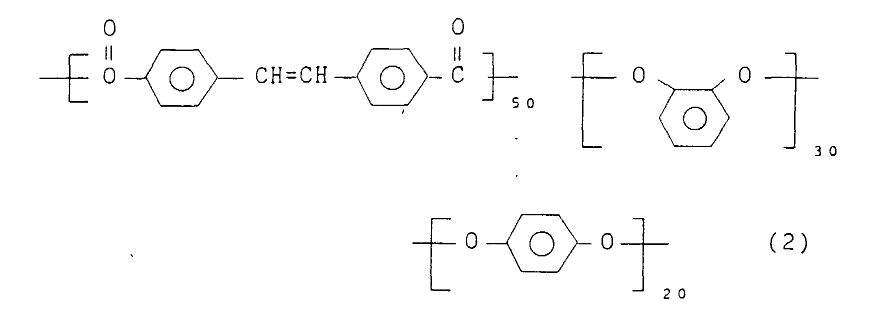

### Example 7

A glass plate which had been washed with concentrated sulfuric acid was dipped in a solution of octadecyltriethoxysilane in toluene to form a vertical alignment layer on the glass plate. The composition of formula (3) was dissolved in a mixed chloroethane/phenol (weight ratio 4/6) solvent so as to provide a total polymer concentration of 25 wt%. Then, the glass plate was dipped in this polymer solution and pulled up for coating of the solution thereon, then allowed to stand at room temperature for 5 hours, then dried at 100°C for 2 hours and heat-treated at 200°C for 30 minutes. A transparent film having a thickness of about 5 µm was obtained, but variations in film thickness of ± 0.3 were observed in a plane. Upon conoscope observation, the resulting compensating layer proved to have a positive crystal structure of homeotropic orientation.

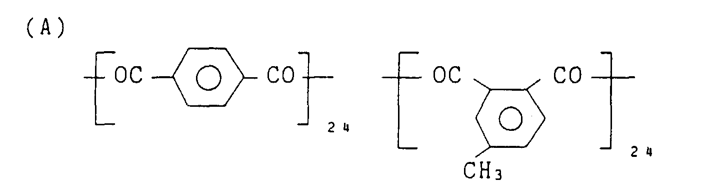

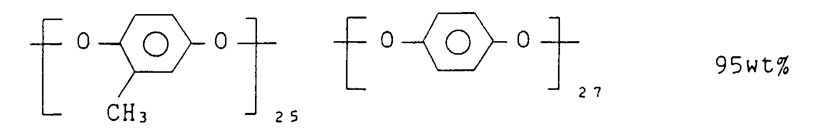

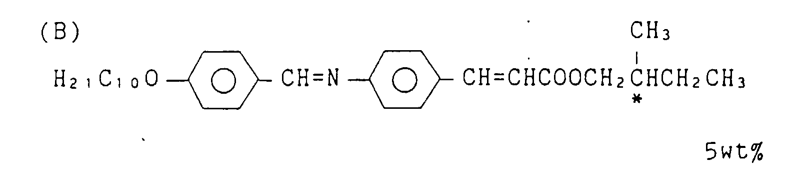

### Example 8

There was prepared a 12 wt% solution of the polymer (inherent viscosity: 0.14, Tg = 93°C) of formula (4) in tetrachloroethane. The solution was then applied onto a raw glass plate by a screen printing method and dried. Further, the coated surface was covered with another raw glass plate, then these glass plates were put onto a hot plate held at 200°C, and the upper glass plate was slightly shifted right and left several times to impart a shear to the polymer. Subsequent cooling could afford a transparent liquid crystal film sandwiched in between the two glass plates. As a result of conoscope observation of this film, clear isogyre was not seen, but when a series of the above operations were performed using high refracting glass plates, not the raw glass plates, and refractive indices were measured, such refractive indices were found to be 1.72 in the thickness direction, 1.57 in the sheared direction and 1.53 in a direction perpendicular thereto.

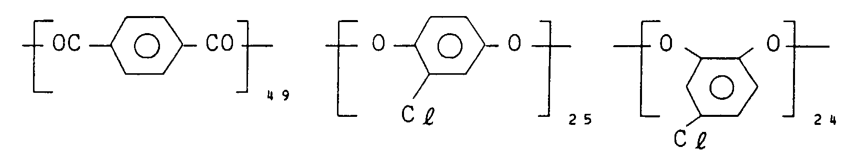

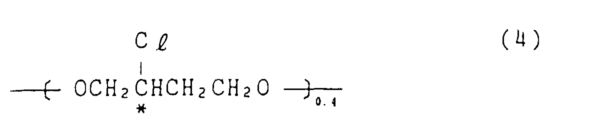

### Example 9

The polymer (clarifying point: 250°C, glass transition point: 110°C) of formula (5) was heat-melted at 280°C and applied onto a glass base. Then, a shear was imparted to the polymer on a hot plate of 190°C, using a cover glass plate, followed by cooling to afford a transparent liquid crystal film. Upon conoscope observation, the resulting compensating layer was found to have a positive crystal structure of homeotropic orientation.

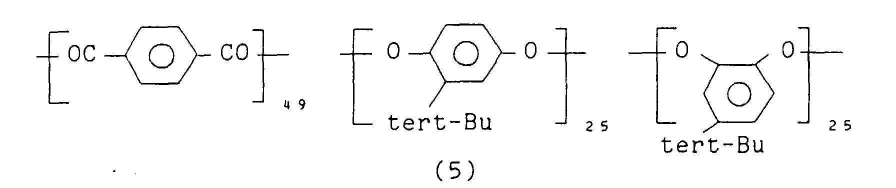

### Example 10

There was prepared a 8 wt% solution of the polymer (inherent viscosity: 0.18, Tg = 75°C) of formula (6) in tetrachloroethane. The solution was applied on a raw glass plate having a dimension of 10 cm x 10 cm and a thickness of 1.1 mm by a spin coating method, dried, heat-treated at 220°C x 45 minutes and cooled to obtain a transparent compensator having a thickness of 0.8 µm. Upon conoscope observation, isogyre was seen at the viewing center and it was found to have a positive crystal structure by inserting a sharp color detector.

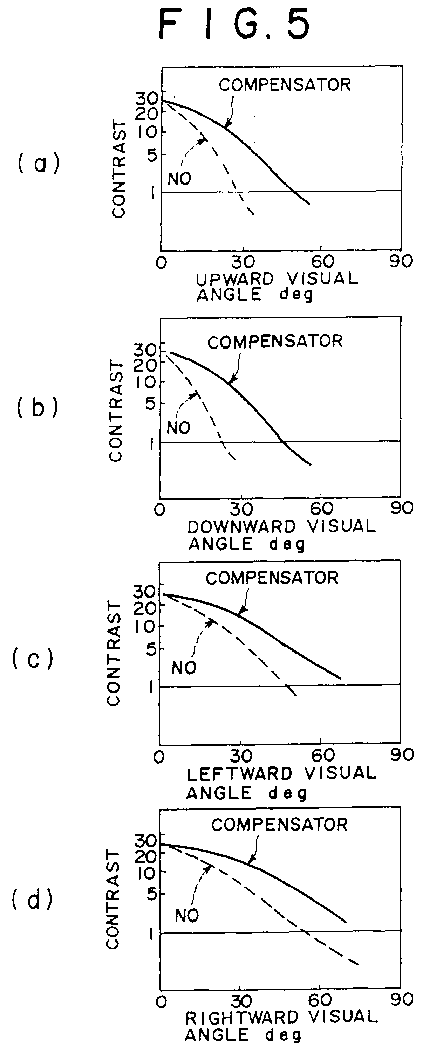

Another compensator having the same thickness as above was prepared and the two viewing compensators were assembled in a STN display having a color compensator as shown in Fig. 4. As a result, a good visual angle compensating effect as shown in Fig. 5.

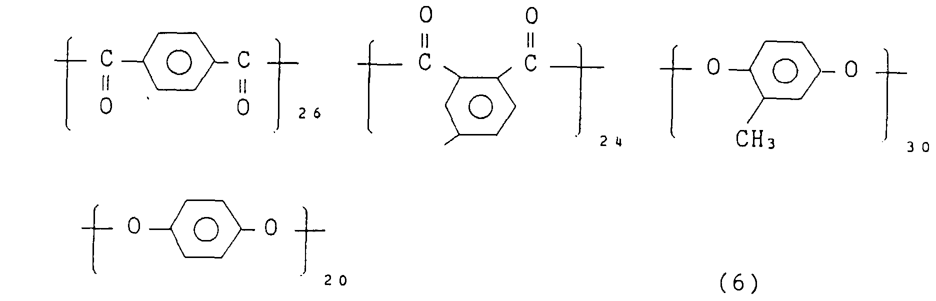

### Example 11

Two viewing angle compensators were prepared by using the polymer solution of Example 10 in the same manner as in Example 10 but by changing the rotation number of the spin coating. The thickness of each compensator was 0.5 µm. There compensators were assembled in a TN display as shown in Fig. 6.

As a result, a change in color tone due to viewing angle was decreased and a viewing angle compensating effect was found.

### (Effect of the Invention)

The viewing angle compensator of the present invention comprises a liquid crystalline polymer having a solidified structure wherein the refractive index in the thickness direction is larger than the refractive index at least in one direction in a plane, whereby it is possible to greatly remedy the viewing angle dependency which is one serious problem involved in the liquid crystal display. As a result, there can be attained a great contribution to a High-grade desplay of a liquid crystal display unit and the attainment of higher performance. Thus, the viewing angle compensator of the present invention is of extremely high industrial value.

The reference numerals and lines used in the drawings are as follows:
1...polarizing plate
2...viewing angle compensator
3...color compensating cell
4...liquid crystal display cell
5...STN display cell
6...TN cell

- Solid line ...: represents the presence of a compensator
- Dotted line ...: represents the absence of a compensator

## Claims

1. A viewing angle compensator for a liquid crystal display, comprising a light transmitting substrate and a film of a liquid crystalline polymer formed on said substrate, said liquid crystalline polymer taking in the liquid crystal state a structure wherein the refractive index in the thickness direction is larger than the refractive index in at least one direction in a plane perpendicular to the thickness direction and assuming a glassy state at a temperature lower than the liquid crystal transition point of the polymer, characterised in that the liquid crystalline polymer exhibits a homeotropic orientation in the liquid crystal state.

2. A viewing angle compensator for a liquid crystal display as set forth in Claim 1, wherein the liquid crystalline polymer is a polyester containing an ortho-substituted aromatic unit.

3. The use of a film, produced by heat-treating a liquid crystalline polymer on a substrate at a temperature higher than the glass transition point of the polymer and then cooling to a temperature lower than said glass transition point to solidify a structure wherein the refractive index in the thickness direction is larger than the refractive index in at least one direction in a plane perpendicular to the thickness direction, and wherein the liquid crystalline polymer exhibits a homeotropic orientation in the liquid crystal state, as a viewing angle compensator for a liquid crystal display.

4. The use according to Claim 3 wherein the liquid crystalline polymer is a polyester containing an ortho-substituted aromatic unit.

## Patentansprüche

1. Sichtwinkelkompensator für eine Flüssigkristallanzeige, der ein lichtdurchlässiges Substrat und eine darauf ausgebildete dünne Schicht aus flüssigkristallinem Polymer enthält, wobei das flüssigkristalline Polymer im flüssigkristallinen Zustand eine Struktur annimmt, bei der der Brechungsindex in Richtung der Dicke größer ist als der Brechungsindex in mindestens einer Richtung in einer zu der Richtung der Dicke senkrecht stehenden Ebene, und bei einer Temperatur, die unter dem Flüssigkristallübergangspunkt des Polymers liegt, einen glasartigen Zustand annimmt, dadurch gekennzeichnet, daß das flüssigkristalline Polymer im flüssigkristallinen Zustand eine homeotrope Orientierung zeigt.

2. Sichtwinkelkompensator für eine Flüssigkristallanzeige nach Anspruch 1, bei dem das flüssigkristalline Polymer ein Polyester ist, der eine ortho-substituierte aromatische Einheit aufweist.

3. Verwendung einer dünnen Schicht, die durch Wärmebehandeln eines flüssigkristallinen Polymers auf einem Substrat bei einer Temperatur, die über dem Glasübergangspunkt des Polymers liegt, und dann Abkühlen auf eine Temperatur unter dem Glasübergangspunkt zur Verfestigung einer Struktur hergestellt wird, bei der der Brechungsindex in Richtung der Dicke größer ist als in mindestens einer Richtung in einer zu der Richtung der Dicke senkrecht stehenden Ebene und wobei das flüssigkristalline Polymer im flüssigkristallinen Zustand eine homeotrope Orientierung aufweist, als Sichtwinkellkomensator für eine Flüssigkristallanzeige.

4. Verwendung nach Anspruch 3, wobei das flüssigkristalline Polymer ein Polyester ist, der eine ortho-substituierte aromatische Einheit aufweist.

## Revendications

1. Compensateur d'angle de lecture pour un afficheur à cristaux liquides, comprenant un substrat transmettant la lumière et un film de polymère cristallin liquide formé sur ce substrat, ce polymère cristallin liquide prenant à l'état de cristal liquide une structure dans laquelle l'indice de réfraction dans la direction de l'épaisseur est supérieur à l'indice de réfraction dans au moins une direction dans un plan perpendiculaire à cette direction de l'épaisseur et prenant un état vitreux à une température inférieure au point de transition du polymère vers un cristal liquide, caractérisé en ce que ce polymère cristallin liquide présente une orientation homéotrope dans l'état de cristal liquide.

2. Compensateur d'angle de lecture pour un afficheur à cristaux liquides suivant la revendication 1, dans lequel le polymère cristallin liquide est un polyester contenant une unité aromatique ortho-substituée.

3. Utilisation d'un film produit par traitement à chaud d'un polymère cristallin liquide sur un substrat à une température supérieure à la température de transition vitreuse du polymère, puis refroidissement à une température inférieure à cette température de transition vitreuse de façon à solidifier une structure dans laquelle l'indice de réfraction dans la direction de l'épaisseur est supérieur à l'indice de réfraction dans au moins une direction dans un plan perpendiculaire à cette direction de l'épaisseur et dans laquelle le polymère cristallin liquide présente une orientation homéotrope dans l'état de cristal liquide, en tant que compensateur d'angle de lecture pour un afficheur à cristaux liquides.

4. Utilisation suivant la revendication 3, dans laquelle le polymère cristallin liquide est un polyester contenant une unité aromatique ortho-substituée.
